# EUROPÄISCHE PATENTSCHRIFT

(11) **EP 2 487 306 B1**
(45) Veröffentlichungstag und Bekanntmachung des Hinweises auf die Patenterteilung: **28.05.2014**
(21) Anmeldenummer: 11154087.8
(22) Anmeldetag: 10.02.2011
(51) Int. Cl.: E04B 1/74, B32B 15/14, B32B 17/12

(54) **Bauelementsystem**
Component system
Système de composant

(43) Veröffentlichungstag der Anmeldung: 15.08.2012
(73) Patentinhaber: Isserstedt, Martin, 01279 Dresden (DE); Alvarez Espinosa Juan Carlos, 90408 Nürnberg (DE)
(72) Erfinder: Isserstedt, Peter, 90489 Nürnberg (DE)
(74) Vertreter: Schramm, Michael

(56) Entgegenhaltungen:
- CH-A5- 687 090
- DE-C- 824 097
- DE-U- 1 929 631
- DE-U- 7 504 468
- US-A1- 2005 118 915

## Beschreibung

Gegenstand der Erfindung ist ein Bauelementsystem zur Verwendung in einem Verbundkopplungssystem, aufweisend ein Verkleidungselement, bevorzugt aus Glas, Keramik oder Metall, ein Entkopplungselement und einen Haftmittler.

Derartige Systeme mit einem Entkopplungselement kommen regelmäßig dann zum Einsatz, wenn die anzubringenden Verkleidungselemente sehr groß sind und/oder diese einen anderen Ausdehnungskoeffizienten als die zu verkleidende Oberfläche, wie dies etwa bei Stahl und Glas, der Fall ist, aufweisen. In diesen Fällen können thermische Spannungen, die sich aus der unterschiedlichen Ausdehnung des Untergrundes und des Verkleidungselements ergeben, zum Reißen des Verkleidungselementes oder zum Lösen der Befestigung führen, weshalb solche Verkleidungselemente meistens mit externen mechanischen Halterungen verbaut werden.

Im Stand der Technik sind dennoch entsprechende Lösungen mit einem Entkoppelungselement bekannt. So ist aus der EP 0 700 776 ein Bauwerk bekannt, bestehend aus einem Betonkörper mit einer vorgesetzten Glasscheibe, wobei die Glasscheibe bauwerksseitig eine Beschichtung aus Verbundmörtel aufweist, der wiederum neben einem neutralen Zuschlagsstoff und Zement ein Polyacrylsäurederivat enthält. Dieser Verbundmörtel verfügt über eine ausreichende Elastizität, um die auftretenden Spannungen abzubauen. Er verbindet sich gleichzeitig fest mit dem Beton des Baukörpers.

Nachteilig an diesem Stand der Technik ist, dass die Verbindung zwischen der Glasscheibe, dem Verbundmörtel und dem Beton nicht nachträglich erfolgen kann, da eine sichere Verbindung nur möglich ist, wenn der Beton noch nicht ausgehärtet ist. Es ist daher erforderlich, die Glasscheibe bereits in die Verschalung einzubringen, bevor der Beton in die Verschalung gefüllt wird. Dies macht das Verfahren aufwändig und Reparaturen ausgesprochen schwierig. Ein weiterer Nachteil ist der, dass wegen der speziellen Zusammensetzung des Verbundmörtels eine Verbindung nur zwischen Glas und Beton möglich ist, so dass eine Befestigung von Verkleidungselementen anderer Materialien ebenso wenig möglich ist, wie eine Befestigung von Verkleidungselementen auf anderen Materialien als Beton.

Weiterhin ist aus der EP 0 790 370 ein Halbzeugbauelement für die Verkleidung von Oberflächen bekannt, welches aus einer Glasscheibe und einem Verbundmörtel besteht, wobei der Verbundmörtel wiederum neben einem feinteiligen neutralen Zuschlagsstoff und Zement ein Polyacrylsäurederivat enthält, um die thermischen Spannungen auszugleichen. Dieses Halbzeugbauelement kann ebenfalls an noch nicht ausgehärtetem Beton, aber auch mit einem Fliesenkleber an der Oberfläche des Baukörpers befestigt werden. Nachteilig an diesem Stand der Technik ist, dass erneut nur eine Glasscheibe als Verkleidungselement eingesetzt werden kann.

Die beiden genannten Offenbarungen haben weiterhin den Nachteil, dass die Verbundmörtelschicht Zement und damit auch alkalische Bestandteile aufweist. Diese alkalischen Bestandteile können sich mit der beim Verkleben auftretenden Durchfeuchtung lösen und auf diesem Weg bis zur Glasscheibe gelangen. Dort können sie aufgebrachte Beschichtungen angreifen. Aus diesem Grund sind die genannten Lösungen aus dem Stand der Technik nicht geeignet, um in Verbindung mit Glasplatten verwendet zu werden, die an ihrer bauseitigen Seite eine Beschichtung aufweisen, welche nicht beständig gegenüber alkalischen Materialien ist. Dies ist etwa bei organischen Farben, vor allem aber bei fluoreszierenden und selbstleuchtenden Beschichtungen der Fall.

Aus der DE 824 097 A ist eine Glasfliese bekannt, die aus einer Glasplatte besteht, die einseitig eine aufgeklebte, aus anorganischen Fasern bestehende Vlieslage trägt. An der Unterseite der Glasplatte ist ein Belag, etwa ein Spiegelbelag abgeordnet, auf dem das Vlies aufgeklebt ist. Als Klebstoff kann beispielsweise Polyvinylchlorid oder dessen Derivate verwendet werden.

Aufgabe der vorliegenden Erfindung ist es, die genannten Nachteile zu vermeiden und ein Bauelementsystem zur Verfügung zu stellen, welches auch mit anderen Materialen als Glas eine ausreichende Haftung bei gleichzeitiger Stabilität gegenüber Dehnungseffekten bietet und bei dem gewährleistet ist, dass Teile des Verkleidungselements auch bei einer Beschädigung des Verkleidungselements durch starke äußere Einwirkungen an dem Baukörper haften bleiben.

Aus dem Stand der Technik sind auch weitere Befestigungsmöglichkeiten bekannt, etwa eine unmittelbare Verklebung des Verkleidungselementes mit dem Bauwerk unter Einsatz eines Klebers auf Silikonbasis. Das Silikon bietet dabei eine ausreichende Elastizität um thermische Spannungen aufzufangen. Nachteilig ist hier vor allem, dass Silikon altert und daher eine dauerhaft stabile Verbindung zwischen Verkleidungselement und Baukörper nicht gewährleistet werden kann und eine annähernd vollflächige Verklebung auf dampfdichten Oberflächen nicht möglich ist.

Gelöst wird diese Aufgabe durch ein Bauelementsystem zur Verwendung in einem Verbundkopplungssystem, aufweisend ein Verkleidungselement, bevorzugt aus Glas, Keramik oder Metall, ein bauseitig mit dem Verkleidungselement verbundenes Entkopplungselement, welches mit dem Verkleidungselement über einen Haftmittler fest verbunden ist, wobei weder das Entkopplungselement noch der Haftmittler Zement oder andere alkalische Bestandteile aufweist, und wobei der Haftmittler eine hoch reißfeste thermoplastische und spannungsabbauende Verbundfolie aufweist.

Eine besonders günstige Variante ist die Verwendung von Fasern, die vorzugsweise zu einem Abstandsgewirk oder Gewebe als Entkopplungselement verbunden sind. Ein derartiges Abstandsgewirk oder Gewebe kann in verschiedenen Dicken und mit verschiedenen Materialeigenschaften hergestellt werden, so dass es gleichzeitig über die erforderliche Stabilität zum Halten der Verkleidungselemente verfügt, ausreichende Hafteigenschaften in Verbindung mit dem Haftmittler aufweist und darüber hinaus frei von alkalischen Bestandteilen ist. Bevorzugt wird das Abstandsgewirk oder Gewebe unter Verwendung von Textil-, Kunst-, Karbon-, Glas-, oder Pflanzenfasern hergestellt, wobei auch jeglicher andere Faserntyp, welcher geeignet ist, die oben genannten Eigenschaften darzustellen, eingesetzt werden kann.

Die hoch reißfeste thermoplastische und spannungsabbauende Verbundfolie weist vorzugsweise Polyethylen, Polyurethan, Polyvinylalkohol, Polymethylmethacrylat, Ethylenvinylacetat, Polyacrylat oder Polyvenylbutyral auf. Der Haftmittler kann alternativ aber auch einen Polymerkleber aufweisen.

Das Verkleidungselement kann, insbesondere wenn es auf ästhetische Fragen besonders ankommt, transparent ausgestaltet sein und auf seiner bauseitigen Seite eine Beschichtung, etwa eine Farbschicht oder eine selbstleuchtende Schicht, aufweisen. Regelmäßig dienen derartige Schichten zu Dekorationszwecken, wobei allerdings auch andere Einsatzzwecke, etwa zum Schutz von Bauteiloberflächen, denkbar sind. Die Beschichtung kann dabei organische Materialien aufweisen und zumindest teilweise selbstleuchtend sein.

Zur Verfügung gestellt wird auch ein komplettes Verbundkopplungssystem, welches mindestens ein Bauelementsystem aufweist, wobei das Verbundkopplungssystem zusätzlich einen Baukörper, etwa aus Beton oder Ziegeln und einen Kleber, etwa einen handelsüblichen Fliesenkleber, aufweist, wobei das Bauelementsystem mit Hilfe des Klebers dauerhaft mit dem Baukörper flächig verbunden ist und in seiner Gesamtheit das Verbundkopplungssystem bildet.

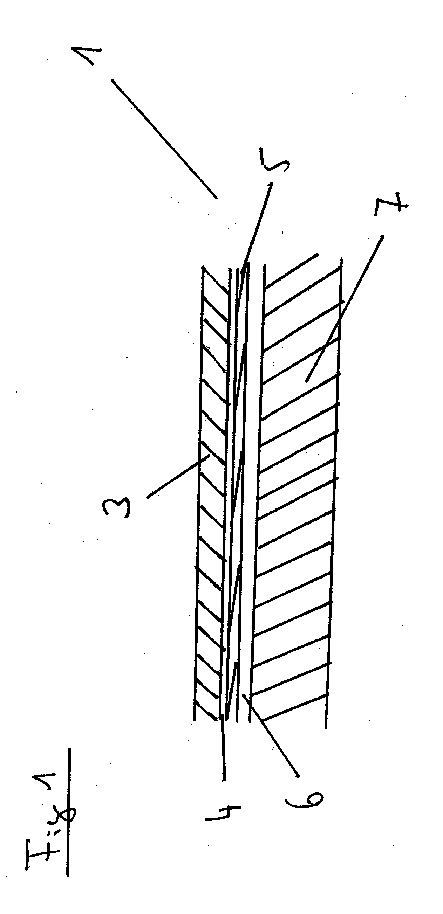

Ein gesondertes Ausführungsbeispiel wird nachfolgend anhand der Fig. 1 erläutert, die einen Schnitt durch ein komplettes Verbundkopplungssystem 1, aufweisend ein Bauelementsystem 3,4,5, einen Kleber 6 sowie den Baukörper 7 selbst, zeigt.

An der Außenseite findet sich das Verkleidungselement 3, welches vorzugsweise eine Glasplatte ist. Es können allerdings auch jegliche andere Materialien verwendet werden, so etwa Metall, Keramik, Kunststoff oder auch Holz. Auf der bauseitigen Seite der Glasplatte kann eine, hier nicht gezeigte, Beschichtung, etwa farblicher Art, angebracht sein. Bauseitig folgt dann der Haftmittler 4, welcher bevorzugt eine stark klebende Folie oder ein Polymerkleber ist, auf deren bauseitiger Rückseite dann das Entkopplungselement 5 angebracht ist. Dieses Entkopplungselement 5 kann bereits im Werk aufgebracht sein. Eine Aufbringung erst auf der Baustelle ist aber ebenfalls möglich. Das Entkopplungselement 5 besteht besonders vorteilhaft aus einem Gewebe, welches textiler Art sein, aber auch aus Kunstfasern bis hin zu Karbonfasern bestehen kann oder zumindest teilweise bestehen kann. Alternativ kann eine spannungsabbauende Folie zum Einsatz kommen. Über die Art des verwendeten Gewebematerials sowie die Dicke des Gewebes können die elastischen und die Trageigenschaften an die jeweilige Anwendung angepasst werden.

Durch die vollflächige, beidseitige Verklebung von Verkleidungselement 3 und Entkopplungselement 5 mittels der hier gezeigten Folie 4 entsteht eine besonders gute Haftwirkung. Darüber hinaus führt dies dazu, dass im Falle von Beschädigungen, etwa einem Springen der Glasplatte durch starke äußere Einwirkungen, die einzelnen Teile nicht lose von der Wand fallen, was die Sicherheit erhöht. Dies ermöglicht auch den Einsatz des Verbundsystems an Decken, wobei hier Versuche mit mehreren Quadratmeter großen Glasplatten bereits erfolgreich unternommen wurden, wobei der Effekt auch erreicht wird, wenn statt der Folie ein entsprechender Kleber verwendet wird.

Ein weiterer Vorteil dieses Aufbaus ist, dass die Verkleidungselemente 3, insbesondere solche aus Glas und/oder Keramik, in ausreichender Größe abseits der Baustelle fabrikmäßig hergestellt und vorkonfektioniert werden können. Alle Materialien, die direkt zu dem Bauelementsystem 3,4,5 gehören, sind bei Lieferung abgebunden, so dass an der Baustelle ein individueller Zuschnitt des Bauelementsystems erfolgen kann, ohne dass die erfindungsgemäße Wirkung beeinträchtigt wird.

Das Bauelementsystem selbst wird mit einem handelsüblichen Kleber 6, bei Befestigung an tragfähigen Bauteilen wie beispielsweise Ziegel- und/oder Betonwänden bzw. bei allen für Fliesen üblichen Untergründen, wird dies in der Regel ein handelsüblicher Fliesenkleber sein, bauseits an der Wand oder Decke oder auch dem Boden befestigt und bildet somit das gesamte Verbundkopplungssystem.

Durch die Verwendung eines separaten Entkopplungselementes 5 ist die bauseitige Seite des Bauelementsystems völlig unabhängig von dem verwendeten Verkleidungselement 3, so dass sichergestellt ist, dass praktisch jedes Verkleidungselement 3 verwendet werden kann, welches klassischerweise nur sehr aufwändig an der Wand oder gar an der Decke befestigt werden kann. Dies gilt nicht nur für Glas, sondern eben auch für Metall und andere Materialien bis hin zu Holz.

Durch eine geeignete Auswahl des Entkopplungselementes 5 sowie des Haftmittlers 4 wird im Übrigen sichergestellt, dass das Verkleidungselement 3 selbst mehr oder weniger wasserdicht vom Baukörper 7 getrennt ist. Dies ermöglicht die Verwendung auch aufwändiger und empfindlicher, etwa nicht alkalibeständiger Farbbeschichtungen an der bauseitigen Seite des Verkleidungselementes, was bisher nach dem Stand der Technik nicht möglich war.

## Patentansprüche

1. Bauelementsystem zur Verwendung in einem Verbundkopplungssystem (1), aufweisend ein Verkleidungselement (3), bevorzugt aus Glas, Keramik oder Metall, ein bauseitig mit dem Verkleidungselement (3) verbundenes Entkopplungselement (5), welches mit dem Verkleidungselement (3) über einen Haftmittler (4) fest verbunden ist, wobei weder das Entkopplungselement (5) noch der Haftmittler (4) Zement oder andere alkalische Bestandteile aufweist, **dadurch gekennzeichnet, dass** der Haftmittler (4) eine hoch reißfeste thermoplastische und spannungsabbauende Verbundfolie aufweist.

2. Bauelementsystem nach dem vorhergehenden Anspruch, **dadurch gekennzeichnet, dass** Verkleidungselement (3), Haftmittler (4) und Entkopplungselement (5) vollflächig miteinander verbunden (laminiert) sind.

3. Bauelementsystem nach einem der vorhergehenden Ansprüche, **dadurch gekennzeichnet, dass** das Entkopplungselement (5) Fasern aufweist, die vorzugsweise zu einem Abstandsgewirk oder Gewebe verbunden sind.

4. Bauelementsystem nach dem vorhergehenden Anspruch, **dadurch gekennzeichnet, dass** das die Fasern aus einer Gruppe von Materialien ausgewählt werden:
- Textilfasern,
- Kunstfasern,
- Carbonfasern,
- Glasfasern,
- Pflanzenfasern.

5. Bauelementsystem nach einem der vorhergehenden Ansprüche, **dadurch gekennzeichnet, dass** die hoch reißfeste thermoplastische und spannungsabbauende Verbundfolie Polyethylen, Polyurethan, Polyvinylalkohol, Polymethylmethacrylat, Ethylenvinylacetat, Polyacrylat oder Polyvenylbutyral aufweist.

6. Bauelementsystem nach einem der vorhergehenden Ansprüche 1 bis 4, **dadurch gekennzeichnet, dass** der Haftmittler (4) einen Polymerkleber aufweist.

7. Bauelementsystem nach einem der vorhergehenden Ansprüche, **dadurch gekennzeichnet, dass** das Verkleidungselement (3) transparent ausgestaltet ist und auf seiner bauseitigen Seite eine Beschichtung aufweist.

8. Bauelementsystem nach dem vorhergehenden Anspruch, **dadurch gekennzeichnet, dass** die Beschichtung farbig ist und Dekorationszwecken dient.

9. Bauelementsystem nach dem vorhergehenden Anspruch 7, **dadurch gekennzeichnet, dass** die Beschichtung organische Materialien aufweist.

10. Bauselementsystem nach dem vorhergehenden Anspruch, **dadurch gekennzeichnet, dass** die Beschichtung zumindest teilweise selbstleuchtend ist.

11. Verbundkopplungssystem (1), aufweisend mindestens ein Bauelementsystem nach einem der vorhergehenden Ansprüche, einen Baukörper (7), etwa aus Beton oder Ziegeln, und einen Kleber (6), etwa einen handelsüblichen Fliesenkleber, mit dem das mindestens eine Verkleidungselement (3) mit dem Baukörper (7) dauerhaft und flächig verbunden ist.

## Claims

1. Component system for use in a composite coupling system (1) having a cladding element (3), preferably made of glass, ceramics or metal, a decoupling element (5), connected on the building side with the cladding element (3), that is fixedly connected with the cladding element (3) by an adhesive agent (4), whereby neither the decoupling element (5), nor the adhesive agent (4) comprises cement or other alkaline components, **characterized in that** the adhesive agent (4) comprises a thermoplastic highly tear resistant and tension reducing composite foil.

2. Component system according to the preceding claim, **characterized in that** the cladding element (3), the adhesive agent (4) and the decoupling element (5) are connected (laminated) with each other over the whole surface.

3. Component system according to one of the preceding claims, **characterized in that** the decoupling element (5) comprises fibers that are preferably connected to a spacer fabric or tissue.

4. Component system according to the preceding claim, **characterized in that** the fibers are selected from a group of materials:
- textile fibers,
- synthetic fibers,
- carbon fibers,
- glass fibers,
- plant fibers.

5. Component system according to one of the preceding claims, **characterized in that** the thermoplastic highly tear resistant and tension reducing composite foil comprises polyethylene, polyurethane, polyvinyl alcohol, polymethyl methacrylate, ethylene vinyl acetate, polyacrylate or polyvinylbutyral.

6. Component system according to one of the preceding claims 1 to 4, **characterized in that** the adhesive agent (4) comprises a polymer adhesive.

7. Component system according to one of the preceding claims, **characterized in that** the cladding element (3) is configured transparent and comprises a coating on its building-sided side.

8. Component system according to the preceding claim, **characterized in that** the coating is coloured and is for decorative purposes.

9. Component system according to the preceding claim 7, **characterized in that** the coating comprises organic materials.

10. Component system according to the preceding claim, **characterized in that** the coating is at least partially self-illuminating.

11. Composite coupling system (1) having at least one component system according to one of the preceding claims, a building structure (7), for example of concrete or bricks, and an adhesive (6), for example a commercial tile adhesive, with which the at least one cladding element (3) is permanently connected across the whole surface to the building structure (7).

## Revendications

1. Système de composant pour utiliser dans un système de couplage composite (1) présentant un élément d'habillage (3), de préférence en verre, en céramique ou en métal, un élément de découplage (5), relié du côté du bâtiment à l'élément d'habillage (3), qui est relié de manière fixe à l'élément d'habillage (3) par un agent d'adhérence (4), cependant que ni l'élément de découplage (5), ni l'agent d'adhérence (4) présente du ciment ou d'autres composants alcalins, **caractérisé en ce que** l'agent d'adhérence (4) présente une feuille composite thermoplastique extrêmement résistante à la déchirure et qui supprime les tensions.

2. Système de composant selon la revendication précédente, **caractérisé en ce que** l'élément d'habillage (3), l'agent d'adhérence (4) et l'élément de découplage (5) sont reliés (laminés) l'un à l'autre sur toute la surface.

3. Système de composant selon l'une des revendications précédentes, **caractérisé en ce que** l'élément de découplage (5) présente des fibres qui sont reliées de préférence à un tricot d'espacement ou à un tissu.

4. Système de composant selon la revendication précédente, **caractérisé en ce que** les fibres sont sélectionnées dans un groupe de matériaux :
- fibres textiles,
- fibres synthétiques,
- fibres de carbone,
- fibres de verre,
- fibres végétales.

5. Système de composant selon l'une des revendications précédentes, **caractérisé en ce que** la feuille composite thermoplastique extrêmement résistante à la déchirure et qui supprime les tensions présente du polyéthylène, du polyuréthane, de l'alcool polyvinylique, du polyméthacrylate de méthyle, de l'éthylène acétate de vinyle, du polyacrylate ou du polyvinylbutyral.

6. Système de composant selon l'une des revendications précédentes 1 à 4, **caractérisé en ce que** l'agent d'adhérence (4) présente une colle polymère.

7. Système de composant selon l'une des revendications précédentes, **caractérisé en ce que** l'élément d'habillage (3) est configuré transparent et présente une enduction sur sa face du côté du bâtiment.

8. Système de composant selon la revendication précédente, **caractérisé en ce que** l'enduction est de couleur et sert à des fins décoratives.

9. Système de composant selon la revendication précédente 7, **caractérisé en ce que** l'enduction présente des matériaux organiques.

10. Système de composant selon la revendication précédente, **caractérisé en ce que** l'enduction est au moins partiellement autoluminescente.

11. Système de couplage composite (1) présentant au moins un système de composant selon l'une des revendications précédentes, un corps de bâtiment (7), par exemple en béton ou en briques, et une colle (6), par exemple une colle à carreaux courante dans le commerce avec laquelle l'élément d'habillage qui existe au moins (3) est reliée de manière durable et en surface avec le corps de bâtiment (7).
